Europäisches Patentamt

European Patent Office

Office européen des brevets

(19)

(11) **EP 1 496 386 A2**

(12) **EUROPÄISCHE PATENTANMELDUNG**

(43) Veröffentlichungstag:
   **12.01.2005 Patentblatt 2005/02**

(51) Int Cl.⁷: **G02B 21/18**, G02B 21/16,
   G02B 21/00

(21) Anmeldenummer: **04015957.6**

(22) Anmeldetag: **07.07.2004**

(84) Benannte Vertragsstaaten:
   **AT BE BG CH CY CZ DE DK EE ES FI FR GB GR
   HU IE IT LI LU MC NL PL PT RO SE SI SK TR**
   Benannte Erstreckungsstaaten:
   **AL HR LT LV MK**

(30) Priorität: **11.07.2003 DE 10332073**

(71) Anmelder: **CARL ZEISS JENA GmbH
   07745 Jena (DE)**

(72) Erfinder:
   • **Wolleschensky, Ralf
     99510 Apolda (DE)**
   • **Kempe, Michael
     07751 Kunitz (DE)**

(54) **Anordnung zur optischen Erfassung von in einer Probe angeregter oder rückgestreuter Lichtstrahlung mit Doppelobjektivanordnung**

(57)   Anordnung und Verfahren zur optischen Erfassung von in einer Probe angeregter und/ oder rückgestreuter Lichtstrahlung,
wobei die Beleuchtung der Probe und / oder die Detektion des Probenlichtes über mindestens zwei auf unterschiedlichen Seiten der Probe angeordnete Objektive erfolgt,
die Probenbeleuchtung in eine oder in die Nähe einer Pupillenebene des Strahlenganges zwischen Probenebene und Erfassungsebene mindestens in einer Achse fokussiert wird und in dieser Ebene Mittel zur räumlichen Trennung des Beleuchtungslichts vom Detektionslicht vorgesehen sind.

Abb.   1

**Beschreibung**

Die Erfindung bezieht sich auf ein Verfahren in der Mikroskopie, insbesondere der Fluoreszenzmikroskopie, der Laser-Scanning-Mikroskopie, der Fluoreszenz-Korrelationsspektroskopie und der Scanningnahfeldmikroskopie, zur Untersuchung von vorwiegend biologischen Proben, Präparaten und zugehörigen Komponenten. Mit eingeschlossen sind auf Fluoreszenzdetektion basierende Verfahren zum Screenen von Wirkstoffen (High Throughput Sceening). Simultan-Untersuchungen von Proben mit Mehrfachfluorophoren in Echtzeit durch eine simultane Beleuchtung und/oder Detektion der Probe von beiden Seiten werden möglich.

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet. Die Anregung der Farbstoffe erfolgt meist mittels Absorption eines hochenergetischen Photons (Einphotonen-Anregung). Neben der Anregung der Farbstoffmoleküle mit einem hoch energetischen Photon ist auch eine Anregung mit mehreren Photonen geringerer Energie möglich. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996).

Zur Untersuchung dicker Präparate eignet sich insbesondere ein Laser-Scanning-Mikroskop wie in DE19702753A1 beschrieben. Von einem dreidimensional ausgeleuchteten Bild wird durch spezielle Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.

Aus dem Stand der Technik sind so genannte Linienscanner bekannt (Lit.: Corle, Kino; "Confocal Scanning Optical Microscopy and Related Imaging Systems"; Academic Press 1996). Der prinzipielle Aufbau entspricht im wesentlichen dem eines LSM. Jedoch wird statt eines Punktfokus eine Linie in die Probe abgebildet und die zu untersuchende Probe nur noch in einer Richtung gescannt. Durch das Scannen einer Linie anstatt eines Punktes kann die Bildaufnahmerate erheblich vergrößert werden. Somit kann dieses Scanverfahren zur Beobachtung von schnell ablaufenden Prozessen in Echtzeit (Echtzeitmikroskopie) verwendet werden. In DE 7505 sind weitere Verfahren und Anordnungen für Linienscanner beschrieben.

In einer weiteren Anordnung zur Echtzeitmikroskopie nach dem Stand der Technik wird das komplette zu untersuchende Feld mittels einer aufgeweiteten Lichtquelle beleuchtet. Jedoch werden nur spezielle Punktmuster des gesamten zu scannenden Feldes durch eine sich schnell drehende Scheibe freigegeben. Diese Verfahren werden in der Literatur meist als Nipkow-Disk Verfahren bezeichnet (Lit.: Corle, Kino; "Confocal Scanning Optical Microscopy and Related Imaging Systems"; Academic Press 1996).

In einem weiteren Verfahren nach dem Stand der Technik, der sogenannten strukturierten Beleuchtung, nutzt man die Modulationstiefe der optischen Abbildung einer Amplitudenstruktur (z. B. Gitter) als Kriterium für die Tiefenschärfe. Für eine detaillierte Beschreibung wird auf T. Wilson et al.; "Method of obtaining optical sectioning by using structured light in a conventional microscope"; Optics Letters 22 (24) 1997 verwiesen.

Aus dem Stand der Technik sind verschiedene Anordnungen mit Doppelobjektiven bekannt. Diese ermöglichen:

1.) das effektive Einsammeln der Farbstofffluoreszenz (siehe DE 19942998),
2.) die Erhöhung der optischen Auflösung bei punktförmiger Probenbeleuchtung in einem Laser-Scanning-Mikroskop - 4 Pi Mikroskop (Lit: Schrader et al.; Biophysical Journal Volume 75, October 1998, 1659-1668),
3.) die Erhöhung der optischen Auflösung in einem Weitfeldmikroskop mit kohärenter Probenbeleuchtung, so genanntes Standing Wave Mikroskop (F. Lanni, Applications of Fluorescence in the Biomedical Sciences, 1 st ed. Liss, New York, 1986) und
4.) die Erhöhung der optischen Auflösung in einem Weitfeldmikroskop mit inkohärenter Probenbeleuchtung, so genanntes I2M, I3M und I5M (M. G. L. Gustafsson, D. A. Agard, and J. W. Sedat, "I5M: 3D widefield light microscopy with better than 100 nm axial resolution," J. Microsc. (Oxford) 195, 10-16 (1999)).

Nachteile der Verfahren nach dem Stand der Technik sind:

Das 4Pi Mikroskop ist als punktscannendes Verfahren langsam und ermöglicht keine laterale Strukturierung und damit laterale Auflösungssteigerung. Die Weitfeldverfahren benötigen zur eineindeutigen Zuordnung der Objektinformation eine inkohärente Lichtquelle. Weiterhin ist der Einsatz einer Raumfilterung ("Konfokalität") nicht möglich, wodurch ein hoher Signaluntergrund bei dicken Proben vorliegt, der zu einem verringertem Signal-Rausch-Verhältnis führt. Weiterhin sind hohe Spitzenintensitäten für nichtlineare Probenwechselwirkung ohne Bleichen aufgrund der nicht großen Beleuchtungsfläche schwierig zu erreichen.

In Doppelobjektivanordnungen erfolgt die Trennung des Anregungslichtes vom von der Probe emittierten Licht nach dem Stand der Technik durch spektrale Trennung unter Ausnutzung des Stokesshiftes, durch eine Einschränkung der numerischen Apertur der zur Probenbeleuchtung/-detektion verwendeten Optiken und durch eine Aufteilung in verschiedene Polarisationsrichtungen. Für Details zum Stand der Technik wird auf Pawley, "Handbook of biological confocal Microscopy" (Plenum Press 1995) verwiesen. Nachteilig bei allen Verfahren nach dem Stand der Technik insbesondere bei Verwendung von Doppelobjektivanordnungen ist, dass die Trennung des Anregungslichtes vom von der Probe emittierten Licht in Doppelobjektivanordnungen wellenlängenabhängig oder mit eingeschränkter Effizienz typischerweise 70% bis 90% - abhängig von den geforderten Spekraleigenschaften und der Anzahl der Beleuchtungslinien - erfolgt. Sollen verschiedene Wellenlängen zur Anregung der Farbstofffluoreszenzen eingesetzt werden, so müssen die Filter entsprechend angepasst bzw. gewechselt werden, wodurch eine Nachjustage der optischen Anordnungen speziell bei der interferometrischen Überlagerung der Strahlen in einer Doppelobjektivanordnung erforderlich ist. Zusätzlich sind die Verfahren nach dem Stand der Technik zum Einsatz in optischen Systemen bei denen die Strahlen die optischen Elemente zur Trennung mit einer starken Neigung treffen nicht geeignet, da sich hierdurch z. B. bei einem dichroitischen Strahlteiler die Spektraleigenschaften verändern oder bei einem Polarisationsteiler die Effizienz der Polarisationsaufteilung verschlechtert.

Erfindungsgemäß werden Verfahren und Anordnungen gemäß DE10257237A1 bei Verwendung von Doppelobjektivkonfigurationen beschrieben mit denen besonders vorteilhaft das Anregungslicht von der in der Probe angeregten und/oder rückgestreuten Lichtstrahlung (z. B. Fluoreszenz / Lumineszenz) mit hoher Effizienz getrennt werden kann. Durch den Einsatz spezieller Elemente werden die spezifische Eigenschaften einer kohärenten Probenbeleuchtung und einer inkohärenten Probendetektion ausgenutzt. Die Trennung ist hierbei gegenüber dem Stand der Technik unabhängig von der verwendeten Wellenlänge und ist deshalb insbesondere für den Einsatz in der Multifluoreszenzmikroskopie, d.h. zur simultanen Anregung verschiedener Farbstoffe besonders geeignet. Eine mechanische Umschaltung der Elemente zur Trennung der Anregungs- von der Detektionsstrahlung und eine häufig damit verbundene Nachjustage der optischen Anordnung bei Verwendung verschiedener Anregungswellenlängen bzw. spektraler Detektionswellenlängenbereiche, insbesondere für so genanntes Multitracking, wie in EP977069 A2 beschrieben, ist nicht erforderlich. Weiterhin ist es möglich, das von der Probe in Richtung Detektor gestreute Licht von dem auf direktem Wege reflektierten Licht zu separieren. Das Element zur Trennung des Anregungslichtstrahlung von der in der Probe angeregten und/oder rückgestreuten Lichtstrahlung ist insbesondere zum Einbau an Stellen, an denen starke Strahlneigungswinkel auftreten geeignet. Die optische Auflösung wird durch die erfindungsgemäßen Anordnungen gegenüber Anordnungen zur Trennung des Anregungs- vom Detektionsstrahlengang nach dem Stand der Technik nicht verschlechtert. Weiterhin kann die Beleuchtungsverteilung am Ort der Probenwechselwirkung manipuliert werden. Dadurch ist es möglich so genannte Regions of Interest (ROI) in Echtzeit zu scannen. Zusätzlich können die aus der Weitfeldmikroskopie bekannten Beleuchtungsverfahren, wie z. B. eine schiefe Beleuchtung realisiert werden.

Die vorliegende Erfindung hat weiterhin zum Ziel die Nachteile, die mit 4Pi oder 15M Anordnungen verbunden sind, zu überwinden und somit die Vorteile eines punktscannenden mit denen eines Weitfeldverfahren zu vereinen, um maximale Auflösungssteigerung in lateraler und axialer Richtung zu erzielen.

Anordnungen zum Screenen von Farbstoffen wie z. B. in so genannten Chipreadern ähneln in ihrem optischen Aufbau einem Laser-Scanning-Mikroskop. Sie scannen jedoch ein deutlich größeres Bildfeld zur Untersuchung der makroskopischen Proben, beispielsweise Screenen von Wirkstoffen auf einem Biochip. Die Kantenlänge der Scanfelder betragen hierbei einige 10 mm. Diese Scanfelder können z. B. durch eine Vergrößerung der Scanwinkel der Galvoscanner, durch eine Anordnung der Probe in einem Zwischenbild der Mikroskopanordnung oder durch eine spezielle Objektivanordnung (Makroobjektiv), die das Zwischenbild vergrößert auf die Probe abbildet, erzielt werden.

Durchflusszytometer dienen der Untersuchung und der Klassifikation von Zellen und anderen Partikeln. Die Zellen befinden sich hierzu in einer Flüssigkeit gelöst und werden durch eine Kapillare gepumpt. Zur Untersuchung der Zellen wird ein Laserstrahl von der Seite in die Kapillare fokussiert. Die Zellen sind mit verschiedenen Farbstoffen oder fluoreszierenden Biomolekülen gefärbt. Gemessen wird das angeregte Fluoreszenzlicht und das rückgestreute Anregungslicht. Die Trennung des Fluoreszenzsignals der Probe von dem Anregungslicht erfolgt mittels dichroitischen Strahlteilern. Der Stand der Technik ist in "Flow Cytometry and Sorting", Second Edition, M.R. Melamed, T. Lindmo, M. L. Mendelsohn, Eds. Wiley & Sons, Inc. New York, 1990, pp 81-107 beschrieben.

Die erfindungsgemäße Lösung ist in bildgebenden wie in analytischen Mikroskopiersystemen einsetzbar. Die Mikroskopsysteme sind bildgebende Systeme wie Laser-Scanning-Mikroskope zur dreidimensionalen Untersuchung von biologischen Präparaten mit einer optischen Auflösung bis zu 200 nm, Scanning-Nahfeld-Mikroskope zur hochaufgelösten Untersuchung von Oberflächen mit einer Auflösung von bis zu 10 nm. Fluoreszenzkorrelations-Mikroskope zur quantitativen Bestimmung von Molekülkonzentrationen und zur Vermessung von Molekül-Diffusionen. Weiterhin sind auf Fluoreszenzdetektion basierende Verfahren zum Screenen von Farbstoffen und Verfahren zur Durchflusszytometrie eingeschlossen.

In all den o.g. Systemen werden Fluoreszenzfarbstoffe zur spezifischen Markierung der Präparate eingesetzt. Die o.g. Aufgabe wird durch Verfahren und Anordnungen gemäß den unabhängigen Patentansprüchen gelöst. Bevorzugte Weiterbildungen sind Gegenstand der abhängigen Ansprüche.

Durch die erfindungsgemäßen Verfahren können die Anzahl der simultan einsetzbaren Farbstoffsignaturen, d.h. die Anzahl der simultan untersuchbaren Eigenschaften beispielsweise von Zellen erhöht werden. Bei sich stark überlappenden bzw. nahe beieinander liegenden Spektralsignaturen der einzelnen Farbstoffe muss nach dem Stand der Technik der detektierte Wellenlängenbereich oder die numerische Apertur zur getrennten Detektion der Fluoreszenzsignale einzelner Farbstoffe eingeschränkt werden. Dadurch verringert sich die Empfindlichkeit der Detektion, d.h. es kommt zu einem erhöhten Rauschen der Detektoren, da höhere Verstärkungen genutzt werden müssen. Dies wird durch die erfindungsgemäßen Verfahren und Anordnungen verhindert.

Beschreibung der Erfindung

Im folgenden werden verschiedene Anordnungen näher erläutert, mit denen sich die in der Probe angeregte und/oder rückgestreute Lichtstrahlung (im folgenden Detektionslicht) besonders effizient und wellenlängenunabhängig von dem Anregungslicht in Doppelobjektivanordnungen trennen lässt. Die Anordnungen eignen sich somit insbesondere zum schnellen Multitracking. In der Probe angeregte Lichtstrahlung ist im folgenden Kontext Licht, welches ungerichtet vorzugsweise in einen großen Raumwinkel von der Probe abgestrahlt wird. Dies sind insbesondere in der Probe angeregtes Fluoreszenz- und Lumineszenzlicht.

1. Weitfeldbeleuchtung und -beobachtung mit Doppelobjektivanordnung

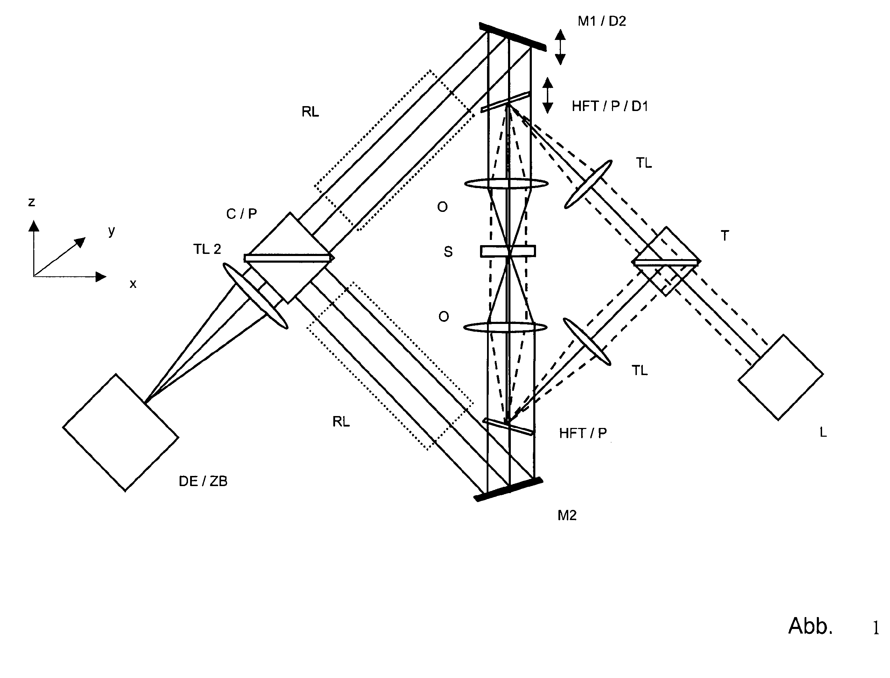

Abb. 1 zeigt schematisch die erfindungsgemäße Anordnung für ein Weitfeldmikroskop mit Doppelobjektivanordnung. Bei einem Weitfeldmikroskop soll die Probe mit einer meist spektral breitbandigen Lichtquelle simultan in mehreren Punkten der Probe in dem zu untersuchenden Feld homogen von zwei Seiten beleuchtet und / oder die Probensignale detektiert werden. Hierzu wird die Lichtquelle L in eine Pupille der Mikroskopeinrichtung, d.h. in die oder in die Nähe der rückwärtigen Brennebene des jeweiligen Objektives oder in einer zur rückwärtigen Brennebene des jeweiligen Objektives konjugierten Ebenen (eingezeichnet ist jeweils die rückwärtige Brennebene P1 ( Pupille)) mittels jeweils einer Optik TL fokussiert. Die Aufspaltung der Strahlung der Lichtquelle bei einer Beleuchtung des Präparats von zwei Seiten erfolgt durch einen Teiler T, der beispielsweise als Polarisationsteiler oder Neutralteiler mit festem oder variablen Teilungsverhältnis ausgebildet sein kann. Wird ein Polarisationsteiler eingesetzt, dann wird die Polarisation in einem Strahlweg mittels einer (nicht dargestellten) lambda/2 Platte gedreht, so dass beide Strahlarme gleiche Polarisation besitzen. Durch jeweils eine weitere Optik O z. B. einem Mikroskopobjektiv, in deren rückwärtigen Brennpunkt genau P liegt, wird das Licht der Lichtquelle mit einem Parallelstrahl in die zu untersuchende Probe S von zwei Seiten abgebildet. Die gestrichelt gezeichneten Linien stellen den Beleuchtungsstrahlengang dar.

Der Beobachtungsstrahlengang, z. B. bei einer Fluoreszenzanregung, ist mit durchgezogenen Linien eingezeichnet. Aufgrund der Art der Probenwechselwirkung z. B. bei einer Fluoreszenz- oder Lumineszenzanregung besitzt das von der Probe abgestrahlte Licht eine geringe räumliche Kohärenz, das heißt jeder in der Probe angeregte Punkt strahlt im wesentlichen unabhängig von den benachbarten Punkten als Punktstrahler in alle Raumrichtungen ab. Die Optiken O (z. B. Mikroskopobjektive) bilden die einzelnen Punktstrahler gemeinsam mit den Tubuslinsen TL2 und ggf. von Relayoptiken RL in eine Zwischenbildebene ZB der Mikroskopeinrichtung ab, wobei die Pupille HFT / P gleichförmig von zueinander inkohärenten Wellenfronten verschiedener Ausbreitungsrichtung ausgeleuchtet wird (durchgezogene Linien / Strahlengang). In der Zwischenbildebene kann, wie aus dem Stand der Technik bekannt, eine CCD Kamera oder ein Okular zur Detektion und/ oder Betrachtung der Probe dienen. Vor dem Detektor befindet sich ein Strahlvereiniger C zur räumlichen Überlagerung der Probensignale die durch die beiden Optiken O aufgesammelt wurden. Die Überlagerung der Strahlwege kann auch direkt auf dem Detektor durch eine Teilung der Pupille erfolgen. Bei Aufnahme einer Fluoreszenz oder Lumineszenz wird zur Unterdrückung des von der Probe rückgestreuten Anregungslichts ein Emissionsfilter (dichroitischer Filter) F eingeschwenkt.

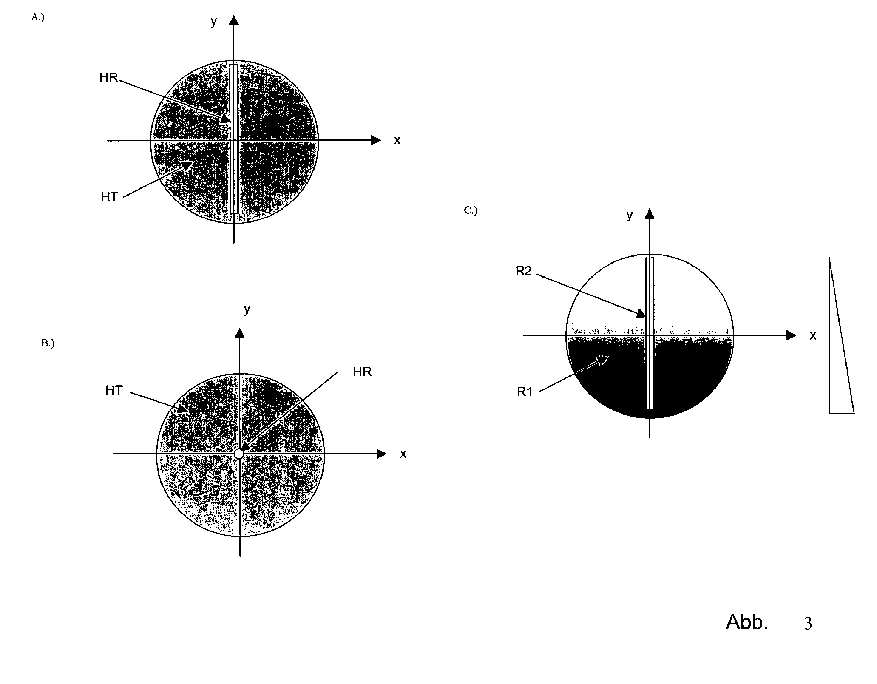

In den Pupillen HFT / P befinden sich die in Abb. 3B dargestellten erfindungsgemäßen Elemente HFT entsprechend DE102 57 237A1, welche die Trennung von Anregungslicht und Detektionslicht vornehmen. HFT sind in dem weiß gezeichneten Bereich HR voll verspiegelt. Der grau gezeichnete Bereich HT um den Koordinatenursprung von XY sind hoch transmittierend insbesondere für den Wellenlängenbereich in dem die Probe Signale abstrahlt. Im einfachsten Falle kann der HR Bereich ein kleiner Spiegel sein. Auf die HR Bereiche wird erfindungsgemäß das Anregungslicht fokussiert. Das von der Probe auf direktem Wege reflektierte Licht gelangt wiederum insbesondere über die HR Bereiche zur Lichtquelle. Das von der Probe diffus gestreute Anregungslicht und / oder in der Probe angeregte Licht treffen HFT entsprechend der Pupillengröße der Mikroskopoptik auf seiner gesamten Fläche, wobei der auf den HT Bereich treffende Anteil in Richtung TL mit Reflektoren M1/M2 abgelenkt und zur Beobachtung im Zwischenbild DE/ZB zur Verfügung steht. Es geht bei dieser Anordnung an MDB nur der auf den HR Bereich fallende Anteil der Detektionsstrahlung verloren. Das Verhältnis der Flächen von HT zu HR beträgt:

$$R = \frac{A_{pupille} - A_{HT}}{A_{Pupille}} = \frac{r_{Pupille}^2 - r_{HT}^2}{r_{Pupille}},$$

wobei der Radius für den HT Bereich in einem Weitfeldmikroskop typischerweise ca. 5 mm und der HR Bereich ca. <0.5 mm betragen. Somit ergibt sich für das Verhältnis und damit für die Effizienz der Strahlaufteilung von MDB R=99%. Diese Effizienz ist unabhängig von der verwendeten Wellenlänge.

2. Beleuchtung der Probe und Detektion im Weitfeld mit Doppelobjektivanordnung und Rückspiegelung Probensignale

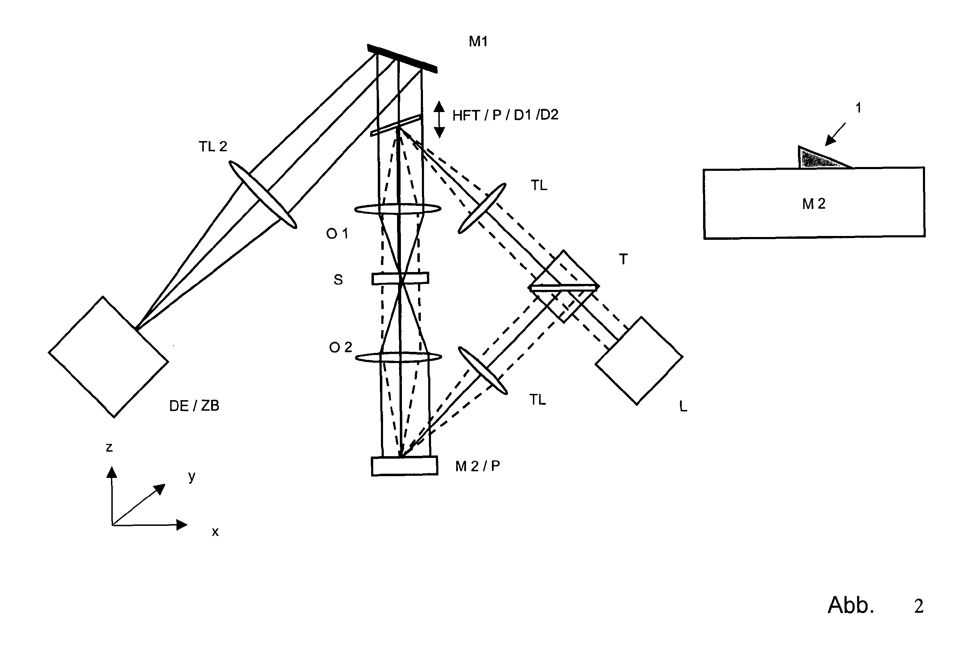

Abb. 2 zeigt schematisch eine weitere erfindungsgemäße Anordnung für eine linienförmige Beleuchtung der Probe und Detektion im Weitfeld mit Doppelobjektivanordnung und Rückspiegelung der Probensignale. Die gestrichelten Linien stellen den Beleuchtungsstrahlengang dar und sind identisch zum Strahlengang in Abb. 1.

Das von der Probe in alle Raumrichtungen abgestrahlte Licht wird von den Objektiven O gesammelt. Das in der Abb. 2 in Richtung HFT abgestrahlte Probenlicht gelangt über HFT und Spiegel M1 auf direktem Wege zum Detektor DE. Das in Richtung Spiegel M2 abgestrahlte Licht wird durch M2 in sich zurückgespiegelt, so dass es durch die Probe hindurch auf den Detektor DE gelangt. Zur Einspiegelung des Beleuchtungslichts befindet sich auf dem Spiegel M2 ein Bereich mit einer verkippten reflektierenden Fläche (1), so dass die Beleuchtungsstrahlung aus Richtung TL kommend in Richtung des Objektivs O gelenkt wird (siehe vergrößerte Abb. des M2 in Abb. 2).

Die Anordnung ist insbesondere zur effizienten Sammlung der in alle Raumrichtungen abgestrahlten Probensignale entsprechend DE 19942998 geeignet.

3. Linienförmige Beleuchtung der Probe und Detektion im Weitfeld mit Doppelobjektivanordnung

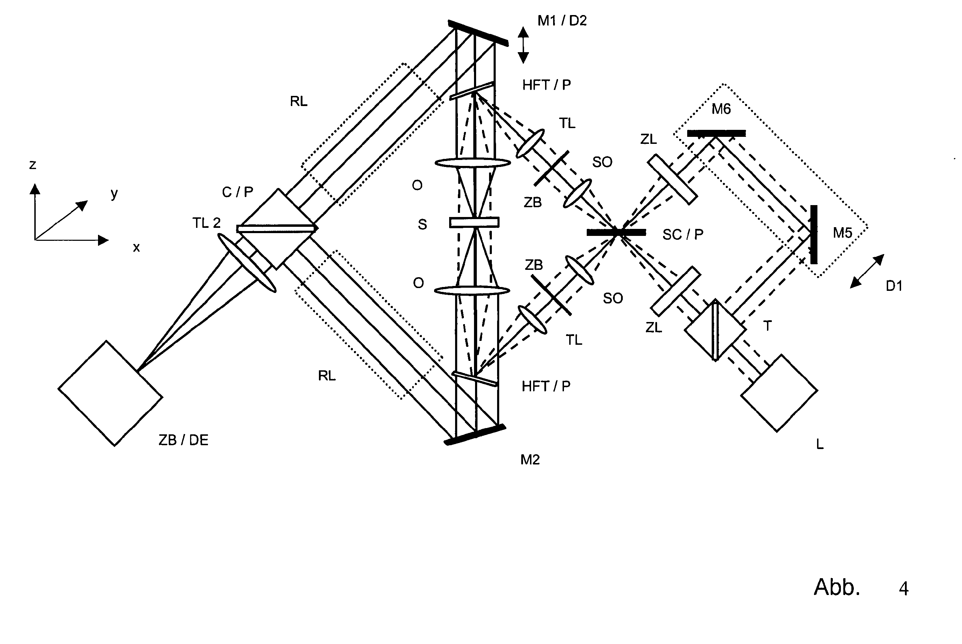

Abb. 4 zeigt schematisch die erfindungsgemäße Anordnung für eine linienförmige Beleuchtung der Probe und Detektion im Weitfeld für eine Doppelobjektivanordnung. Die durchgezogenen Linien stellen den Beleuchtungsstrahlengang dar.

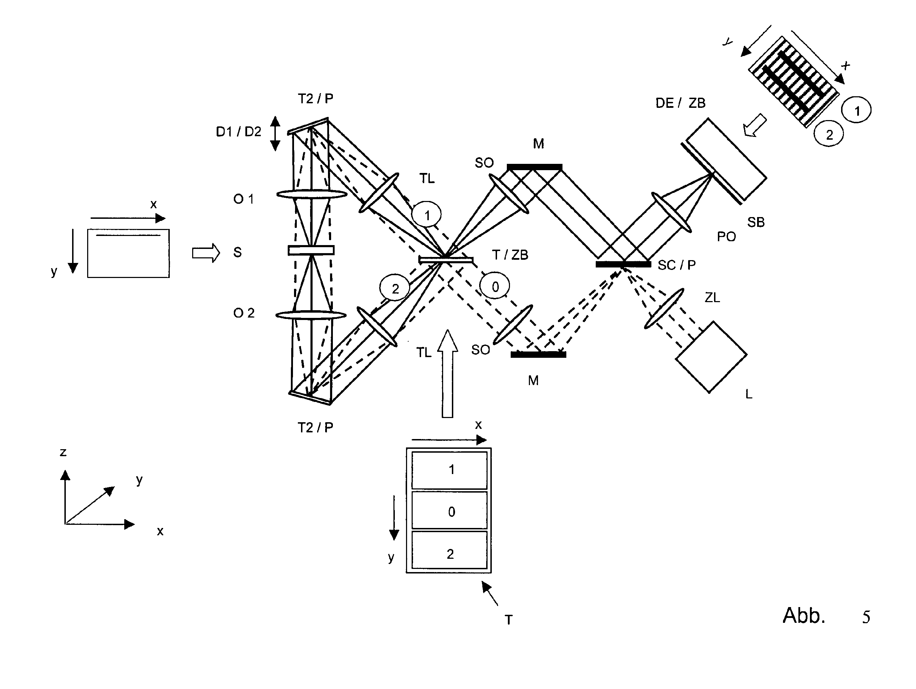

Bei einem Linienscanner wird die Probe mit einem Linienfokus z. B. entlang der X-Koordinate beleuchtet, die in der Koordinate senkrecht zur Linie verschoben wird. Hierzu wird die Lichtquelle L in eine Zwischenbildebene oder eine Pupille der Mikroskopeinrichtung mittels einer Optik ZL linienförmig fokussiert. Durch die Fokussierung mit ZL in Y- Richtung in eine Pupille P, beispielsweise durch Zylinderlinsen, so dass sich in die Probenebene eine beugungsbegrenzte linienförmige Intensitätsverteilung entlang X ergibt. Die linienförmige Intensitätsverteilung entlang X auf der Probe kann weiterhin durch diffraktive oder holographische Elemente nach dem Stand der Technik (Lit.: "Diffractive optics improve product design", Photonics Spectra, Laurin Publishing Co., Inc. September 1995) erfolgen. Weiterhin kann eine so genannte Powell Linse, wie sie in US 4,826,299 beschrieben ist, eingesetzt werden. Letzteres Element erzeugt im Vergleich zur Zylinderlinse bei gaußförmiger Beleuchtungsintensitätsverteilung, wie sie z. B. für singlemodige Laser typisch ist, eine homogenere Intensitätsverteilung entlang der Linie. Die Powell Linse und die diffraktiven bzw. holographischen Elemente werden hierzu beispielsweise in einer Pupillenebene der Mikroskopvorrichtung besonders vorteilhaft zwischen Lichtquelle und Scanner angeordnet. Zur Beleuchtung der Probe S von 2 Seiten wird die Lichtquelle L in 2 Strahlengänge mittels dem Teiler T aufgespalten. Beide Strahlengänge treffen auf verschiedene Seiten des Scanners SC (Vollspiegel), der sich in einer Pupille der Mikroskopanordnung befindet. Mit den Spiegeln M5 und M6 kann ein Delay zwischen den beiden Beleuchtungsstrahlengängen eingestellt werden. Die Scanner SC können auch vor dem Strahlvereiniger analog Abb. 5 angeordnet werden.

Mit einer weiteren Optik TL wird das Licht in die Pupille HFT / P der Mikroskopanordnung abgebildet. In den Pupillenebenen der Mikroskopanordnung ergibt sich jeweils ein Linienfokus entlang der Y-Achse. Die Pupillenebenen sind zueinander und zur rückwärtigen Brennebene des Objektiv konjugierte Ebenen der Mikroskopanordnung, so dass der Scanner SC die linienförmige und beugungsbegrenzt fokussierte Intensitätsverteilung senkrecht zu dieser bewegen kann (y-Koordinate in der Probe). Die Abbildung von P in die Probe erfolgt über die Scanoptik SO, die Tubuslinse TL und das Objektiv O.

Das Element HFT / P kann auch auf einem Scanner zum Scannen des Linienfokus in Y-Richtung anbracht werden. Bei dieser Anordnung kann die Optik TL und SO entfallen. Die transparente Optik ZL zur Formung der Linie kann prinzipiell auch durch ein reflektierendes Element z. B. Zylinderspiegel ersetzt werden, dessen Brennpunkt auf SC / P liegt. Der Zylinderspiegel wird unter 45° in der in Abb. 4 gezeichneten xz-Ebene angeordnet. In dieser Ebene besitzt der Spiegel auch seine fokussierende Wirkung. Weiterhin wird durch den Spiegel der Strahlweg zur Lichtquelle um 90° abgewinkelt.

Der Beobachtungsstrahlengang, z. B. bei einer Fluoreszenzanregung, ist gestrichelt eingezeichnet. Aufgrund der Art der Probenwechselwirkung z. B. bei einer Fluoreszenz- oder Lumineszenzanregung ist das von der Probe emittierte Licht von geringer räumlicher Kohärenz. D.h. jeder in der Probe angeregte Punkt strahlt im wesentlichen unabhängig von den benachbarten Punkten als Punktstrahler in alle Raumrichtungen ab. Die Optiken O (z. B. Mikroskopobjektive) bilden die einzelnen Punktstrahler gemeinsam mit der Tubuslinse TL in eine Zwischenbildebene der Mikroskopeinrichtung ab, wobei die Pupille HFT / P gleichförmig von zueinander im wesentlichen inkohärenten Wellenfronten verschiedener Ausbreitungsrichtung ausgeleuchtet wird (durchgezogener Strahlengang). Im Anschluss wird das Licht der Probe mit Hilfe einer Optik TL2 auf eine CCD Kamera ZB / DE in einem Zwischenbild (z. B. TV-Port eines Mikroskops) übertragen und gemessen. Dies hat den Vorteil, dass spezielle CCD-Kameras wie z. B. zeitgegatete Kameras zur 3D aufgelösten Messung der Fluoreszenzlebensdauer eingesetzt werden können. Das zu beobachtende Licht der Probe wird am HFT / P transmittiert und mit einem in ZB angeordneten Detektor DE detektiert.

Der Linienfokus wird mit dem Galvoscanner SC in einer Raumrichtung abgerastert. Bei Aufnahme einer Fluoreszenz oder Lumineszenz wird zur Unterdrückung des von der Probe rückgestreuten Anregungslichts ein Emissionsfilter (dichroitischer Filter) F eingeschwenkt.

In der Pupille HFT / P befindet sich das in Abb. 3A dargestellte Element HFT, welches die Trennung des Anregungs- vom Detektionslicht vornimmt. Die Funktion des Elements ist analog zur Funktion des in Abb. 3B dargestellten Elements. Abweichend ist lediglich die linienförmige Ausbildung des HR Bereichs. Auf den HR Bereich wird erfindungsgemäß das Anregungslicht fokussiert. Das von der Probe auf direktem Wege reflektierte Licht gelangt wiederum insbesondere auf den HR Bereich zur Lichtquelle. Das in der Probe diffus gestreute Anregungslicht und / oder angeregte Licht treffen HFT entsprechend der Pupillengröße der Mikroskopoptik auf seiner gesamten Fläche, wobei der auf den HT Bereich treffende Anteil zur Beobachtung im Zwischenbild DE gelangt. Das Verhältnis der Flächen von HT zu HR beträgt:

$$R = \frac{A_{Pupille} - A_{HT}}{A_{Pupille}} = \frac{\pi \cdot r_{Pupille} - 2 \cdot b_{HT}}{\pi \cdot r_{Pupille}},$$

wobei der Pupillenradius für den HT
Bereich in einem Mikroskop typischerweise ca. 5 mm und die Breite des HR Bereich ca. $b_{HT} < 0.25$ mm betragen. Somit ergibt sich das Verhältnis und damit für die Effizienz der Strahlaufteilung von MDB Wellenlängen unabhängig R=97%.

Mit der beschriebenen Anordnung können wiederum die oben beschriebenen Betriebsarten realisiert werden. Die Strahlteilung bzw. Strahlvereinigung erfolgt wie oben beschrieben mit dem Teiler T und dem Vereiniger C und die Einstellung des Delays mit D1 und / oder D2.

4. Linienförmige Beleuchtung der Probe und linienförmige Detektion mit Doppelobjektivanordnung

Abb. 5 zeigt eine erfindungsgemäße Anordnung bei der eine linienförmige Beleuchtung der Probe und eine linienförmige Detektion der Probensignale mit Doppelobjektivanordnung erfolgt. Dies hat den Vorteil, dass ein Zeilensensor zur Detektion eingesetzt werden kann. Zusätzlich kann eine spektral aufgelöste Detektion der Probensignale und spezielle Probenbeleuchtungsszenarien entsprechend den Anordnungen aus DE10155002 verwendet werden, auf deren Offenbarung hier Bezug genommen wird..

Der Beleuchtungsstrahlengang ist analog zu dem in Abb. 4. Lediglich Strahlaufspaltung bzw. Zusammenführung der Strahlwege (1) und (2) erfolgt in einem Zwischenbild T / ZB. Zusätzlich erfolgt in diesem Zwischenbild eine räumliche Separation des Anregungslichts vom Beobachtungslicht mit Hilfe des Teilers T, so dass das Beobachtungslicht über eine Scanoptik SO einen Spiegel M, einen Scanner SC und eine weitere Optik PO auf vorzugsweise einen Zeilendetektor DE / ZB, der sich in einem Zwischenbild der Mikroskopanordnung befindet, gelangt. In der Pupille T2 / P erfährt die Beobachtungsstrahlung eine Verkippung ggb. der Anregungsstrahlung, so dass sie auf dem Element T im Zwischenbild auf Bereiche (1/2) außerhalb der Anregungsstrahlung (0) fällt. Der Teiler T2 ist in Abb. 3C schematisch dargestellt. Dieser besitzt zwei reflektierende Bereiche R1 und R2, die gegeneinander geneigt sind. Das Anregungslicht trifft vorzugsweise den Bereich R2 und das Beobachtungslicht den Bereich R1. Die Elemente T2 sind in den Strahlengängen (1) und (2) jeweils gegeneinander verdreht angeordnet (um 180° um die Achse senkrecht zur xy-Ebene in Abb. 3C), so dass die Beobachtungsstrahlung die Bereiche (1/2) auf dem Teiler T / ZB vorzugsweise oberhalb bzw. unterhalb der Anregungsstrahlung angeordnet sind. Der Teiler T /ZB ist so aufgebaut (siehe unterer Bildteil) , dass in dem Bereich (0) eine Strahlaufspaltung der Anregungsstrahlung beispielsweise durch einen 50/50 Neutralteiler, einen Polarisationsteiler oder ein Amplitudengitter erfolgt. Im Bereich (2) ist dieser transparent und im Bereich (1) zumindest für die Beobachtungsstrahlung voll verspiegelt. Die Bereiche sind entsprechend so groß dimensioniert, dass die Scanbewegung der Scanlinie mit SC nicht zu einer Überlagerung der Bereiche führt.

Auf dem Detektor DE entsteht jeweils ein Zwischenbild (Linienfokus) für die Strahlengänge (1) und (2). Diese fallen vorzugsweise auf einen Zeilendetektor mit länglichen Pixeln. Eine konfokale Detektion kann durch jeweils eine Schlitzblende SB (Lage - Schlitz Längsrichtung in der Zeichenebene) für den Strahlengang (1) und (2) fokussiert werden, wodurch Detektionslicht, das außerhalb des Fokus entstand, unterdrückt wird. Hinter der Schlitzblende befindet sich ein Zeilen- oder Flächendetektor DE (Lage der Zeile entlang der Schlitzblende) der ortsaufgelöst (entlang des Linienfokus), der die in der Probe angeregte und/oder rückgestreute Lichtstrahlung detektiert.

Eine Überlagerung der beiden Zwischenbilder auf dem Detektor kann durch die oben erwähnte Pupillenteilung (S. 8) oder durch eine Abbildung einer Pupille in der Koordinate senkrecht zum Zeilendetektor erfolgen. Für letzteres muss vorzugsweise die Optik PO (Abb. 5) durch zwei Zylinderoptiken ersetzt werden, wobei durch eine Zylinderoptik eine Abbildung des Zwischenbilds auf DE erfolgt und mit Hilfe der zweiten Zylinderoptik eine Abbildung der Pupille SC / P auf den Detektor senkrecht zur Empfängerzeile erfolgt. Die Überlagerung der beiden Beobachtungsstrahlengänge (1) und (2) auf dem Detektor ist insbesondere dann nötig, wenn eine interferometrische Vermessung der Probensignale erfolgen soll. Besonders vorteilhaft bei dieser Anordnung ist die Abbildung des Beleuchtungsund des Beobachtungslichts über ein gemeinsames Interferometer, so dass eine besonders hohe Stabilität realisiert werden kann.

5. Linienförmige Beleuchtung der Probe und linienförmige Detektion mit Doppelobjektivanordnung und Tischscanner / oder Doppelscanner

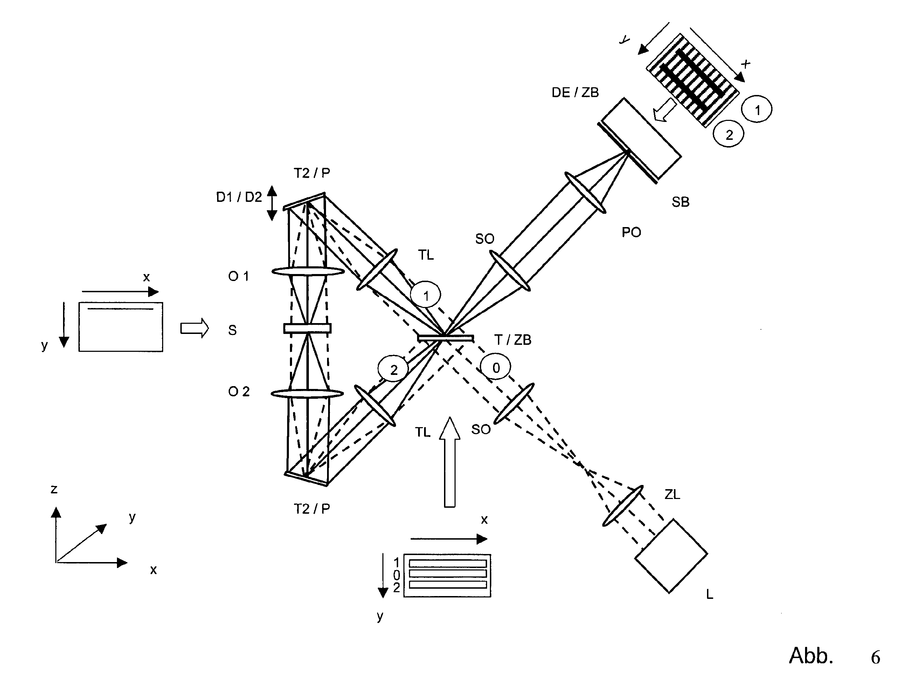

Abb. 6 zeigt eine weitere Anordnung zur linienförmigen Beleuchtung und Beobachtung der Probe mit einer Doppelobjektivanordnung. Die Unterschiede zur Anordnung in Abb. 5 betreffen die Ausbildung des Probenscanners. Dieser wird in dieser Anordnung durch einen Tischscanner (links dargestellt) (der die Probe lateral zur optischen Achse bewegt) oder durch 2 vorzugsweise synchron laufende Scanner, die sich jeweils am Ort T2 befinden realisiert. Durch den Wegfall einer zusätzlichen Pupillenebene der Mikroskopanordnung vereinfacht sich der Aufbau. Zusätzlich können die Bereiche (0) bis (2) auf dem Element T in ihrer y-Ausdehnung reduziert werden.

6. Beleuchtung und Beobachtung mit Strukturierter Beleuchtung und Doppelobjektivanordnung

Mit den erfindungsgemäßen Anordnungen nach Abb. 1 bis 6 können zusätzlich Weitfeldmikroskope oder Mikroskope mit linienförmiger Beleuchtung / Beobachtung mit strukturierter Beleuchtung aufgebaut werden. Das Licht der Lichtquelle L wird hierzu wie vorher vorzugsweise in 2 Teilstrahlen gleicher Intensität aufgeteilt, die sich jedoch in der Probe S unter einem kleinen Winkel (typisch <5°) schneiden, so dass in der Probe eine Intensitätsmodulation, d.h. sinusförmige Interferenzstruktur entsteht. Hierzu wird mindestens ein HFT beispielsweise in Abb. 5 um die y-Achse verdreht. In einer weiteren Methode zur Erzeugung der Intensitätsmodulation kann der Teiler T (der beispielsweise in einem Zwischenbild der Mikroskopanordnung steht) mittels eines Amplitudengitters (vorzugsweise mit 50/50 Modulation) generiert werden. In Abb. 5 muss beispielsweise hierzu der Bereich (0) des Teilers T mit einem Amplitudengitter bestückt werden. Die über die beiden Strahlwege in die Probe S abgebildeten Intensitätsmodulationen können anschließend beispielsweise durch eine Verkippung mindestens eines HFT / P, beispielsweise in Abb. 5 um die y-Achse, in der Probe überlagert werden. Vorteilhaft bei dieser Art der Erzeugung der Intensitätsmodulation ist die verlustfreie Wellenlängen unabhängige Generierung der beiden Teilstrahlen unabhängig von der Polarisation.

In einer weiteren Methode können mehrere Amplitudenoder Phasengitter in Zwischenbildern der Mikroskopanordnung angebracht werden. Die Zwischenbilder werden mittels zusätzlicher Relayoptiken (nicht gezeichnet) beispielsweise zwischen TL und L in Abb. 5 erzeugt.

Die Lage der Intensitätsmodulation kann durch eine zusätzliche Neigung mindestens eines HFT, beispielsweise in Abb. 5 um die y-Achse, verschoben werden. Die so erzeugten Phasenbilder mit verschiedenen Projektionsszenarien können anschließend beispielsweise zu einem (konfokalen) optischen Schnittbild mit verschiedenen aus dem Stand der Technik bekannten Algorithmen in einem Image Prozessor verrechnet und auf einem Monitor dargestellt.

In allen erfindungsgemäßen Anordnungen können die Reflexionseigenschaften der Bereiche HT und HR auch vertauscht werden, so dass der HR Bereich in diesem Falle hoch transparent ist. In diesem Falle muss beispielsweise in Abb. 1 der Strahlengang am HFT von der Lichtquelle L aus mit dem vom HFT bis zum Detektor DE vertauscht werden. Weiterhin kann das Element bei Verwendung von polarisiertem Anregungslicht auch aus einem Polarisationselement bestehen. Hier wird weiterhin auf DE 10257237A1 verwiesen.

Mit den erfindungsgemäßen Anordnungen können verschiedene Betriebsarten realisiert werden.

a.) die Beleuchtung der Probe kann simultan von 2 Seiten mit und ohne interferometrischer Überlagerung der Beleuchtungsstrahlung erfolgen. Ein Abgleich der Strahlwege kann durch ein Delay vorzugsweise durch Verschieben des D1 vorgenommen werden. Der Teiler T wird vorzugsweise so eingestellt, dass die Beleuchtungsstrahlung gleichmäßig in beide Strahlarme zur Beleuchtung der Probe aufgeteilt werden.

b.) die Detektion der Probensignale kann simultan von 2 Seiten mit und ohne interferometrischer Überlagerung der von einem Probenpunkt ausgesendeten Probensignale erfolgen. Ein Abgleich der Strahlwege im Detektionsstrahlengang kann durch ein Delay vorzugsweise durch Verschieben des D2 vorgenommen werden. Die Strahlengänge zur Detektion der Probensignale werden vorzugsweise so auf den Detektor abgebildet, dass gleiche Signalstärken auf den Detektor DE gelangen.

c.) die Betriebsarten aus a.) und b.) können kombiniert werden.

Die Anordnungen mit linienförmiger Beleuchtung der Probe entsprechend den Abb. 4 bis 6 in Kombination mit den oben beschriebenen Betriebsarten überwinden die Nachteile, die mit 4Pi oder I5M Anordnungen verbunden sind, wobei maximale Auflösungssteigerung in lateraler und axialer Richtung erzielt wird. Insbesondere kann besonders vorteilhaft zur Beleuchtung eine Lichtquelle mit langer Kohärenzlänge verwendet werden. Dies hat den Vorteil, dass eine Strukturierung mit maximalem Kontrast (nahe 100 % Modulationstiefe) in lateraler und axialer Richtung erfolgen kann.

Um die axiale Information eineindeutig zuordnen zu können darf die Strukturierung in axialer Richtung nur in einem begrenzten Bereich auftreten. Bei den Verfahren zur Weitfeldbeleuchtung nach dem Stand der Technik (I2M, I3M und I5M) wird hierzu eine inkohärente Beleuchtung der Probe eingesetzt. Bei dem so genannten Standing Wave Mikroskop, welches eine kohärente Lichtquelle zur Weitfeldbeleuchtung verwendet, ist diese eineindeutige Zuordnung der Objektinformation in axialer Richtung nicht möglicht und dies wird in Kauf genommen.

Im Gegensatz erfolgt bei einer linienförmigen Beleuchtung der Probe gemäß Abb. 4 bis 6 die Einschränkung der axialen Strukturierung durch die außerhalb des Fokusbereichs mit dem Abstand abfallende Intensität der Modulation, d.h. durch die fokussierte Beleuchtung. Es ergeben sich optische Auflösungen die bei:

1.) Verwendung der Betriebsart a.) vergleichbar zu einem I2M Anordnung,
2.) Verwendung der Betriebsart b.) vergleichbar zu einer I3M Anordnung und
3.) Verwendung der Betriebsart b.) vergleichbar zu einer I5M Anordnung.

Im Vergleich zum Stand der Technik ergeben sich insbesondere durch die linienförmige Beleuchtung mittels einer kohärenten Lichtquelle und / oder linienförmige Detektion der Probensignale folgende Vorteile:

- Das Verfahren als parallelisiertes Verfahren ist deutlich schneller als punktscannende Verfahren.
- Es erlaubt in einfacher Weise eine laterale und axiale Strukturierung durch die Neigung von parallelen Strahlbündeln in der Probe, so dass sich geringere Anforderungen an die optischen Strahlwege ergeben
- Es können Detektionsmodi, die dem LSM vergleichbar bzw. durch Verwendung eines Flächendetektors detektionsseitig sogar erhöhte Flexibilität bieten verwendet werden. Beispielsweise können bei einer Matrixdetektion in einer Achse die spektrale Information der Probensignale und in einer Achse senkrecht hierzu die Ortsinformation der Probe gemessen werden.
- Eine zusätzliche einstellbare räumliche Filterung zur erhöhten Streulichtunterdrückung kann durch eine Schlitzblende realisiert werden, wodurch sich der Dynamikbereich der Detektion insbesondere bei dicken Proben erhöht.
- Für eine nichtlineare Wechselwirkung oder Sättigung der Wechselwirkung mit der Probe stehen hohe Spitzenintensitäten aufgrund der Fokussierung der Probenbeleuchtung in einer zumindest einer Achse zur Verfügung.
- Es können eine laterale und axiale Strukturierung durch die Verkippung der Strahlengänge von einander gegenüber stehender Objektive realisiert werden.

Zusätzlich können durch kleine Verschiebungen der Linsen TL beispielsweise in Abb. 1 senkrecht zur optischen Achse die Winkel unter denen die Beleuchtung auf die Probe trifft variiert werden. Somit können je nach Einstellung verschiedene Beleuchtungsszenarien wie z. B.: schiefe Beleuchtung oder Dunkelfeldbeleuchtung realisiert werden.

Grundsätzlich kann die Funktion der Scanner SC zumindest in einer Ebene auch durch einen entsprechenden Scantisch (Objektscanner) ersetzt werden.

## Patentansprüche

1. Anordnung zur optischen Erfassung von in einer Probe angeregter und/ oder rückgestreuter Lichtstrahlung ,
   wobei die Beleuchtung der Probe und / oder die Detektion des Probenlichtes über mindestens zwei auf unterschiedlichen Seiten der Probe angeordnete Objektive erfolgt,
   die Probenbeleuchtung in eine oder in die Nähe einer Pupillenebene des Strahlenganges zwischen Probenebene und Erfassungsebene mindestens in einer Achse fokussiert wird und in dieser Ebene Mittel zur räumlichen Trennung des Beleuchtungslichts vom Detektionslicht vorgesehen sind.

2. Anordnung nach Anspruch 1, wobei von der Probe kommendes Fluoreszenzlicht und/ oder Lumineszenzlicht und / oder Phosphoreszenzlicht und/oder diffus gestreutes Beleuchtungslicht detektiert wird.

3. Anordnung nach einem der vorangehenden Ansprüche,
   wobei eine kohärente Probenbeleuchtung in zumindest teilweise inkohärentes Probenlicht umgewandelt wird

4. Anordnung nach einem der vorangehenden Ansprüche,
   wobei der Kohärenzgrad der Beleuchtung durch die Wechselwirkung mit der Probe verringert wird

5. Anordnung nach einem der vorangehenden Ansprüche,
   wobei mehrere Probenpunkte gleichzeitig beleuchtet werden

6. Anordnung nach einem der vorangehenden Ansprüche,
   wobei die Punkte eine Linie bilden

7. Anordnung nach einem der vorangehenden Ansprüche,
   wobei die Lage der Linie auf der Probe verändert wird

8. Anordnung nach einem der vorangehenden Ansprüche,
   wobei die Form der gleichzeitig beleuchteten Punkte dem Sehfeld einer Mikroskopanordnung entspricht

9. Anordnung nach einem der vorangehenden Ansprüche,
   wobei die Mittel zur räumlichen Trennung aus zumindest einem reflektierenden ersten Abschnitt und zumindest einem transmittierenden zweiten Abschnitt bestehen, wobei der reflektierende Abschnitt für die Einkopplung des Beleuchtungslichtes dient und der transmittierende Abschnitt für den Durchgang des Detektionslichtes in Richtung der Detektion oder der transmittierende für die Einkopplung des Beleuchtungslichtes und der reflektive für die Auskopplung des Detektionslichtes dient.

10. Anordnung nach einem der vorangehenden Ansprüche, wobei ein Strahlteiler vorgesehen ist, der einen zentralen Abschnitt aufweist, der reflektierend oder transmittierend ausgebildet ist und der von einem zweiten Abschnitt umgeben ist, der transmittierend oder reflektierend ausgebildet ist.

11. Anordnung nach einem der vorangehenden Ansprüche,
    wobei eine Beleuchtung von beiden Seiten der Probe erfolgt und auf einer Seite der Probe eine Rückspiegelung des Probenlichts über die Probe zu einem Detektor auf der anderen Seite der Probe erfolgt

12. Anordnung nach einem der vorangehenden Ansprüche,
    wobei eine Beleuchtung von beiden Seiten der Probe erfolgt und auf einer Seite der Probe eine Rückspiegelung des Probenlichts über die Probe zu einem Detektor auf der anderen Seite der Probe erfolgt

13. Anordnung nach einem der vorangehenden Ansprüche,
    wobei eine Detektion von beiden Seiten der Probe und auf einer Seite der Probe eine Rückspiegelung der Beleuchtung über die Probe erfolgt

14. Anordnung nach einem der vorangehenden Ansprüche,
    wobei in einer beleuchtungsseitigen Pupille eine Scananordnung vorgesehen ist, die Beleuchtung in einem Teilbereich des Sehfeldes des Mikroskopes, vorzugsweise linienförmig erfolgt und detektionsseitig eine nicht descannte Detektion erfolgt

15. Anordnung nach einem der vorangehenden Ansprüche,
    wobei eine Detektormatrix zur nicht- descannten Detektion vorgesehen ist

16. Anordnung nach einem der vorangehenden Ansprüche,
    wobei eine descannte Detektion erfolgt, indem das Beobachtungslicht über Spiegel über die Scanordnung zurückgeführt wird und in einer weiteren Pupille des Mikroskopes eine Trennung von Beobachtungslicht und Detektionslicht erfolgt und das Probenlicht auf einen Detektor abgebildet wird.

17. Anordnung nach Anspruch 16,
    wobei die Detektion in einem Zwischenbild erfolgt

18. Anordnung nach einem der vorangehenden Ansprüche,
    wobei in einem beleuchtungs- und detektionsseitigen Zwischenbild ein Teilerelement angeordnet ist, das
    ein erstes, reflektierendes Segment zur Reflektion des Probenlichtes in Detektionsrichtung,
    ein zweites zumindest teilweise durchlässiges Segment zur Transmission des Probenlichtes in Detektionsrichtung
    und ein drittes strahlteilendes Element zur räumlichen Aufspaltung der Beleuchtung oder ein drittes reflektierendes Element oder drittes transmittierendes Element das vorzugsweise räumlich strukturiert ist , aufweist,
    wobei in jeweils einer Pupille auf unterschiedlichen Seiten der Probe , in Detektionsrichtung vor dem Teiler angeordnet, ein reflektierendes Element mit mindestens zwei Bereichen, zur Erzeugung einer anderen Ablenkungsrichtung auf das Beleuchtungslicht als auf das Detektionslicht , angeordnet ist.

19. Anordnung nach einem der vorangehenden Ansprüche,
    wobei mittels optischer Mittel auf eine erste Detektorachse eine Pupille und auf eine zweite Detektorachse senkrecht zur ersten Achse ein Zwischenbild abgebildet wird.

20. Anordnung nach Anspruch 18 oder 19,
    wobei das dritte Segment mindestens in einer Richtung durch Bereiche unterschiedlicher Transmission und/ oder Reflektion eine Strukturierung aufweist

21. Anordnung nach einem der vorangehenden Ansprüche,
wobei eine spektral aufgelöste Detektion des Probenlichtes erfolgt

22. Anordnung nach einem der vorangehenden Ansprüche,
wobei eine Weitfeld-Probenbeleuchtung erfolgt.

23. Anordnung nach einem der vorangehenden Ansprüche,
in einem Laser-Scanning-Mikroskop.

24. Anordnung nach einem der vorangehenden Ansprüche,
mit Einphotonenanregung

25. Anordnung nach einem der vorangehenden Ansprüche,
mit nichtlinearer Anregung.

26. Anordnung nach einem der vorangehenden Ansprüche,
wobei die Anregung so gewählt wird, dass eine Sättigung der Probenwechselwirkung erfolgt.

27. Anordnung nach einem der vorangehenden Ansprüche,
wobei einander auf verschiedenen Seiten der Probe gegenüberstehende Objektive vorgesehen sind, deren optische Mittenachsen im wesentlichen zusammenfallen.

28. Verfahren zum Betrieb einer Anordnung nach einem der vorrangehenden Ansprüche, wobei die Beleuchtung der Probe simultan von 2 Seiten mit oder ohne interferometrische Überlagerung der Beleuchtungsstrahlung erfolgt, so dass die Fokalregionen der Strahlen zur Beleuchtung der Probe sich zumindest teilweise axial und /oder lateral überlagern

29. Verfahren zum Betrieb einer Anordnung nach einem der vorrangehenden Ansprüche,
wobei die Detektion der Probensignale simultan von 2 Seiten mit oder ohne interferometrischer Überlagerung der von mindestens einem einem Probenpunkt ausgesendeten Probensignale erfolgt, so dass die Fokalregionen der Strahlen zur Detektion der Probensignale sich zumindest teilweise axial und oder lateral überlagern.

30. Verfahren zum Betrieb einer Anordnung nach einem der vorrangehenden Ansprüche,
unter Kombination der Schritte aus Anspruch28 und 29

31. Verfahren zum Betrieb einer Anordnung nach einem der vorangehenden Ansprüche, wobei die optische Weglänge von mindestens einem der Beleuchtung- und / oder Detektionsstrahlengänge so angepasst werden, dass die Beleuchtungs- und / oder Detektionsstrahlengänge gleich oder nahezu gleich sind

32. Anordnung zur optischen Erfassung von in einer Probe angeregter und/ oder rückgestreuter Lichtstrahlung ,
wobei die Beleuchtung der Probe und / oder die Detektion des Probenlichtes über mindestens zwei auf unterschiedlichen Seiten der Probe angeordnete Objektive mit linienförmiger Beleuchtung erfolgt.

33. Anordnung nach Anspruch 32, mit
linienförmiger Beleuchtung von zwei Seiten und/ oder Detektion von
zwei Seiten der Probe.

34. Anordnung nach Anspruch 32 oder 33, mit kohärenter Beleuchtung.

35. Anordnung nach einem der vorangehenden Ansprüche,
mit einem Linienscanner zur linienförmigen Beleuchtung

36. Anordnung nach einem der vorangehenden Ansprüche, wobei das Beleuchtungslicht zur Erzeugung einer Linie in einer Achse fokussiert ist.

37. Verfahren zum Betrieb einer Anordnung nach einem der vorrangehenden Ansprüche 32-36, wobei die Beleuchtung der Probe simultan von 2 Seiten mit oder ohne interferometrische Überlagerung der Beleuchtungsstrahlung erfolgt, so dass die Fokalregionen der Strahlen zur Beleuchtung der Probe sich zumindest teilweise axial und oder lateral überlagern

38. Verfahren zum Betrieb einer Anordnung nach einem der vorrangehenden Ansprüche 32-36,
wobei die Detektion der Probensignale simultan von 2 Seiten mit oder ohne interferometrischer Überlagerung der von mindestens einem einem Probenpunkt ausgesendeten Probensignale erfolgt, so dass die Fokalregionen der Strahlen zur Detektion der Probensignale sich zumindest teilweise axial und oder lateral überlagern.

39. Verfahren zum Betrieb einer Anordnung nach einem der vorrangehenden Ansprüche 32-37,
unter Kombination der Schritte aus Anspruch 37 und 38.

**40.** Verfahren zum Betrieb einer Anordnung nach einem der vorangehenden Ansprüche 32-39, wobei die optische Weglänge von mindestens einem der Beleuchtung- und / oder Detektionsstrahlengänge so angepasst werden, dass die Beleuchtungs- und / oder Detektionsstrahlengänge gleich oder nahezu gleich sind

**41.** Verfahren zum Betrieb einer Anordnung nach einem der vorangehenden Ansprüche 32-40 , wobei die Beleuchtung der Probe in mindestens einer senkrecht zur optischen Achse stehenden Richtung eine Struktur aufweist.

**42.** Verfahren nach Anspruch 41,
wobei Probesignale mit verschiedener Lage der Struktur relativ zur Probe aufgezeichnet werden.

**43.** Verfahren nach Anspruch 42, wobei diese Probensignale zu einer Rekonstruktion der Probe verrechnet werden

**44.** Verfahren nach Anspruch 43
Wobei die Berechnung folgende Schritte beinhaltet

1.) Separierung von verschiedenen Informationskomponenten
2.) Verschiebung der Informationskomponenten im Fourierraum
3.) Rekombination der verschobenen Informationskomponenten.

**45.** Verfahren nach Anspruch 41-44, wobei diese Struktur periodisch ist

Abb. 1

Abb. 2

A.)

HR

HT

B.)

HT

HR

C.)

R2

R1

EP 1 496 386 A2

Abb. 3

Abb. 4

Abb. 5

EP 1 496 386 A2

Abb. 6

EP 1 496 386 A2